# EUROPEAN PATENT APPLICATION

(11) **EP 2 573 385 A1**
(43) Date of publication of application: **27.03.2013**
(21) Application number: 11182329.0
(22) Date of filing: 22.09.2011
(51) Int. Cl.: F03D 1/00, F03D 1/06

(54) **Method to rotate the rotor of a wind turbine and means to use in this method**

(71) Applicant: Siemens Aktiengesellschaft, 80333 München (DE)
(72) Inventor: Falkenberg, Peter Loevenskjold, 7400 Herning (DK); Maj, Karl Aage, 8450 Hammel (DK); Poulsen, Henning, 6900 Skjern (DK); Stiesdal, Henrik, 5000 Odense C (DK); Nielsen, Jacob Blach, 7442 Engesvang (DK); Rasmussen, Brian, 7323 Give (DK)

(57) **Abstract**

The invention relates to a method to rotate the rotor of a wind turbine and to means to be used in this method.

A direct driven wind turbine comprises an electrical generator 1 with a rotor and a stator, a hub 2 constructed to receive a rotor blade 3 and actuator means.

The actuator means are constructed and arranged to rotate the rotor of the electrical generator 1 and the hub 2 of the wind turbine in respect to the stator of the electrical generator 1.

The actuator means comprises at least one motor 6 arranged outside of the housing of the wind turbine, while transition means 5 transfer a rotational driving force of the motor 6 for the rotation of the hub 2.

## Description

The invention relates to a method to rotate the rotor of a wind turbine and to means to be used in this method.

A wind turbine transfers the energy of the wind into electrical energy. The wind turbine comprises a nacelle that is connected to a tower and a rotor that is connected to the nacelle. The rotor comprises a hub that is rotatable mounted to the nacelle and at least one rotor blade mounted to the hub.

The wind interacts with the rotor blade of the wind turbine in a way that the rotor rotates. The rotation of the rotor is transferred to an electrical generator.

When the wind turbine is erected, the tower is set up and the nacelle is mounted onto the tower. The hub is mounted to the nacelle and the at least one rotor blade is mounted to the hub.

The at least one rotor blade is hoisted up by a crane and connected to the hub. The hub has to be in a predetermined angular rotational position around his axis of rotation to establish the connection between the hub and the rotor blade.

This position corresponds to the direction of the blade during the fastening of the connection. The position can be a horizontal or a vertical arrangement of the hub and the rotor blade for example.

The hub has to be rotated to establish the connection between the hub and a first rotor blade. In the case of more then one rotor blade that has to be mounted, the position of the hub has to be changed. The hub has to be rotated form the first into a second position to establish the connection between the hub and the second rotor blade.

US 2006/0147308 A1 describes a method of mounting rotor blades to a rotor hub which is connected to a pod of a wind turbine power installation, including the following steps: rotating the rotor hub into a predetermined first position, fitting a rotor blade, rotation the rotor hub by means of the rotor blade into a predetermined second position, and mounting a second rotor blade, wherein the rotation of the rotor hub is effected in the direction of the effect of gravitational force of the first rotor blade which is already mounted.

This shows the disadvantage that there are no gravitational forces to support the rotation before the connection between the hub and the first rotor blade is established. Furthermore the gravitational force of a first rotor blade will support the rotation into a second position only for a part of the rotation. In a certain second part of the rotation the rotation needs to be performed against the gravitational forces of the first rotor blade. Thus the described method is not reliable enough to perform the rotation of the hub during the installation of the rotor blades.

It is the aim of the invention to provide an improved method and apparatus to rotate the hub of a wind turbine during the installation of the rotor blades.

The aim is reached by the features of the independent claim. Preferred embodiments of the invention are described in the dependent claims.

A direct driven wind turbine comprises an electrical generator with a rotor and a stator, a hub constructed to receive a rotor blade and actuator means.

The hub is connected to the rotor of the electrical generator, and the hub and the rotor of the electrical generator are rotatable mounted in respect to the stator of the generator.

The actuator means are constructed and arranged to rotate the rotor of the electrical generator and the hub of the wind turbine in respect to the stator of the electrical generator.

The actuator means comprises at least one motor arranged outside of the housing of the wind turbine, while transition means transfer a rotational driving force of the motor for the rotation of the hub.

In a direct drive wind turbine the rotor of the electrical generator is either connected directly to the hub of the wind turbine. Or it is connected via a shaft to the hub of the wind turbine.

The rotor blades are mounted to the hub during the erection of the wind turbine. Although most of the wind turbines comprise three rotor blades, wind turbines with one or two rotor blades are known.

The hub is connected to the rotor of the electrical generator and is rotatable together with the rotor. The actuator means are constructed and arranged to rotate the rotor of the electrical generator together with the hub of the wind turbine.

Thus the hub is rotated by rotating the rotor of the electrical generator.

The actuator means comprise at least one motor. Thus the rotation of the rotor of the electrical generator and the hub is performed by a motor in a controlled manner.

The motor is arranged outside of the housing of the wind turbine. The housing of the wind turbine is the outer boundary of the wind turbine and is build by the housing of the nacelle or the wall of the tower for example.

Thus no space is needed inside the wind turbine to mount the motor of the actuator means for the installation of the blades. Thus the space within the housing of the wind turbine can be used for the components necessary for the operation of the wind turbine.

Thus an existing layout of a wind turbine does not need to be changed to employ this mode of rotating the rotor for the installation of the blades.

The actuator means comprises transition means that transfer the rotational driving force of the motor for the rotation of the hub. This transition means are connected to the motor and to the hub of the wind turbine or the rotor of the generator.

The transition means are constructed and arranged to transfer the driving force of the motor to the rotor of the generator or the hub. The connection between the motor and the transition means and the connection between the transition means and the hub or the rotor needs to be friction-locked to transfer the force.

The actuator means is independent from other systems that are needed during the operation of the wind turbine. Thus the motor of the actuator means is optimized to the task of rotating the hub during the installation of the wind turbine.

Thus the rotation of the hub is performed by this motor and no additional help is needed to perform the rotation. Thus no additional help is needed like rotating the hub with a crane attached to one of the rotor blades.

A rotation by the help of a crane of other additional equipment is time consuming and expensive. Thus installation time and installation costs are saved.

The actuator means is disassembled after the installation of the turbine blades is completed. Thus the motor can be reused in another installation of the blades. Thus installation material is saved during the installation.

A rotation of the hub is necessary for the installation of the blades, but it can also be necessary before or after the installation of the blades. This can be during the installation of at least a segment of the generator, during maintenance and service, or for the dismantling of the wind turbine.

In a preferred embodiment the wind turbine comprises a nacelle and the motor is connected to the outside of the nacelle.

The motor is directly connected to the outside of the nacelle. This can be directly to the outside of the housing of the nacelle.

In a preferred embodiment the motor is connected to the nacelle close to the boundary between the housing of the nacelle and the outer rotor of the generator. The transition means then is a gear wheel that is constructed to interact with a receiving unit on the rotor of the generator.

In another preferred embodiment the motor is connected to the housing of the nacelle close to the boundary between the housing of the nacelle and the hub of the wind turbine. The transition means then is a gear wheel that is constructed to interact with a receiving unit on the hub.

A preferred place to connect the motor to the nacelle is the top of the nacelle.

Thus the motor is connected to the wind turbine close to the rotor or the hub that needs to be rotated. Thus the transition means interact with a short distance with the rotor or the hub.

In a preferred embodiment the wind turbine comprises a tower and the motor is connected to the outside of the tower.

The motor of the actuator means is mounted to the outer side of the tower wall. The transition means can be a belt, a chain or a gear wheel for example.

The tower wall is very rigid. Thus the motor is connected to a rigid part outside of the housing of the wind turbine. Thus the Tower wall can support the motor and the forces acting on the motor during the transfer of the driving forces.

The outside of the tower wall can be reached easily directly at the ground or by the crane. Thus the installation of the motor is very easy and fast.

In a preferred embodiment the motor is installed separately from the wind turbine.

The motor of the actuator means is arranged on the ground for example or on a vehicle prepared to carry the motor.

Thus the installation of the motor is separate from the wind turbine. Thus the installation work at the wind turbine is independent from the installation work for the motor of the actuator means. Thus installation time is saved.

The motor for the actuator means can be installed on a platform or on a vehicle that is arranged in the area of the wind turbine. Thus the motor is transported to the wind turbine when is it needed, and can be set up quickly. Thus installation time is saved.

In a preferred embodiment the transition means is a belt.

A belt can transfer the driving force while is can bridge a certain distance between the motor and the receiving unit at the hub or the rotor of the generator.

Thus the force is transferred from the motor to the hub or rotor although there is a certain distance between the motor and the hub or rotor.

In a preferred embodiment the transition means is a chain.

A chain drive provides a direct and reliable transfer of the driving force. Thus the reliability of the transfer of the driving force is improved.

A chain drive can transfer more force then a belt drive. Thus the force that has to be transferred can be increased.

In a preferred embodiment the transition means is a gear wheel.

A gear wheel provides a very direct transfer of the driving force from the motor to the hub or the rotor of the generator. Thus the rotation of the rotor or the hub can be controlled more precisely.

In a preferred embodiment the transition means is connected to a receiving unit and the receiving unit is attached to the electrical generator of the wind turbine.

The receiving unit is connected with the belt, the chain or the gear wheel and transfers the driving force to the rotor of the generator. The rotor of the generator is connected with the hub so that the hub is rotating together with the rotor of the generator.

The receiving unit is either a part of the rotor of the generator or is attached to the rotor before the installation of the blades. The receiving unit can be disassembled after the installation of the blades.

Thus the drive force is reliably transferred to the rotor of the generator. Thus the receiving unit can be reused after the installation of the blades of the wind turbine. Thus material is saved during installation.

In a preferred embodiment the transition means is connected to a receiving unit and the receiving unit is attached to the hub of the wind turbine.

The receiving unit is connected with the belt, the chain or the gear wheel and transfers the driving force from the motor to the hub of the wind turbine.

The receiving unit is either a part of the hub or is attached to the hub before the installation of the blades. The receiving unit can be disassembled after the installation of the blades.

Thus the drive force is reliably transferred to the hub of the generator. Thus the receiving unit can be reused after the installation of the blades of the wind turbine. Thus material is saved during installation.

In a preferred embodiment the motor comprises a gear.

Thus the speed and the power of the motor are converted with the gear. Thus the power and speed of the motor can be optimized.

In a preferred embodiment the gear comprises a belt, a chain, a pinion wheel, a cyclo gear or a slew drive.

Thus the speed and the power of the motor are converted with the gear comprising a belt, a chain, a pinion wheel, a cyclo gear or a slew drive. Thus the power and speed of the motor can be optimized.

In a preferred embodiment the motor is controlled by a controller or a control system.

Thus the operation of the motor can be controlled. For the installation of rotor blades at the hub the hub needs to be positioned correctly. By the use of a controller the rotation of the hub can be started and stopped precisely. Thus the position of the hub can be controlled precisely.

In a preferred embodiment the controller is the controller of the wind turbine.
The wind turbine comprises a controller. This controller can also be used to control the motor used for the rotation of the hub. Thus no additional controller is needed. Thus material and installation time is saved.

In a preferred embodiment the control system is a controller separate from the turbine controller.
During the installation of the wind turbine the controller of the wind turbine might not yet be installed or the controller is not yet connected to electrical power.
Thus the controller even might be a controller, which is designed for the motor of the actuator means. Thus the controller is optimized to control the motor. Thus the controller can be reused in other wind turbine installation after the installation of the wind turbine blades is finished.

A rotor blade is mounted to a hub of a direct driven wind turbine as described above, comprising the steps of turning the hub into a predetermined position around the axis of rotation of the rotor of the electrical generator by the use of the actuator means. The actuator means are constructed and arranged to rotate the rotor of the electrical generator and the hub of the wind turbine in respect to the stator of the electrical generator. Then a rotor blade is mounted to the hub.

Thus the rotor blades are mounted to the hub of the wind turbine while the crane used for mounting the blades stays in one place during installation of more then one rotor blade.

Thus time for setting up the crane at a different location is saved. Thus installation time is saved.

The invention is shown in more detail by help of figures.
The figures show a preferred configuration and do not limit the scope of the invention.
FIG 1 shows an external drive to rotate the rotor of the wind turbine.
FIG 2 shows an actuator means mounted to the nacelle.
FIG 3 shows an actuator means mounted to the tower of the wind turbine.
FIG 4 shows actuator means arranged separate from the wind turbine.
FIG 5 shows a wind turbine with the receiving unit arranged at the hub.

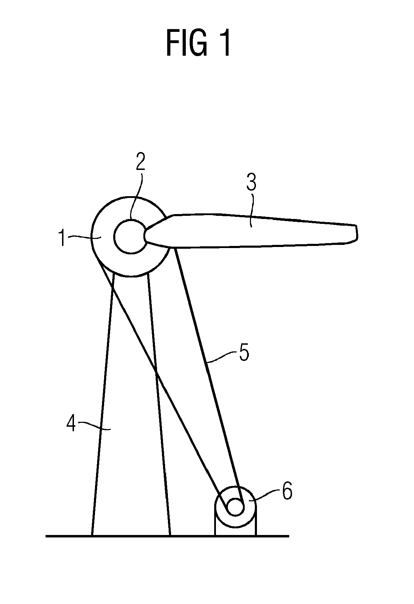

FIG 1 shows a direct driven wind turbine with a tower 4, a generator 1 and a hub 2. A first rotor blade 3 is attached to a hub 2. To attach a second rotor blade the hub 2 has to be rotated.

To rotate the hub 2 a motor 6 is connected via a belt drive 5 to the rotor of the generator 1. In this embodiment the motor 6 is set up on the ground near the wind turbine at the erection site of the wind turbine. The belt 5 reaches from the motor on the ground to the rotor of the generator 1. The generator 1 is an outer rotor generator.

The rotor of the generator 1 and the hub 2 are connected in a way that the hub 2 and the rotor rotate together. The belt 5 can also be a chain that is prepared to transfer the rotation of the motor to the rotor of the generator. The belt or chain 5 can also be arranged to transfer the rotation of the motor 6 directly to the hub 2.

The hub 2 or the rotor of the generator 1 is equipped with a receiving unit that receives the belt or chain 5. This receiving unit is prepared to transfer the kinetic energy of the belt or chain 5 into a rotational energy of the hub 2 and the rotor of the generator 1.

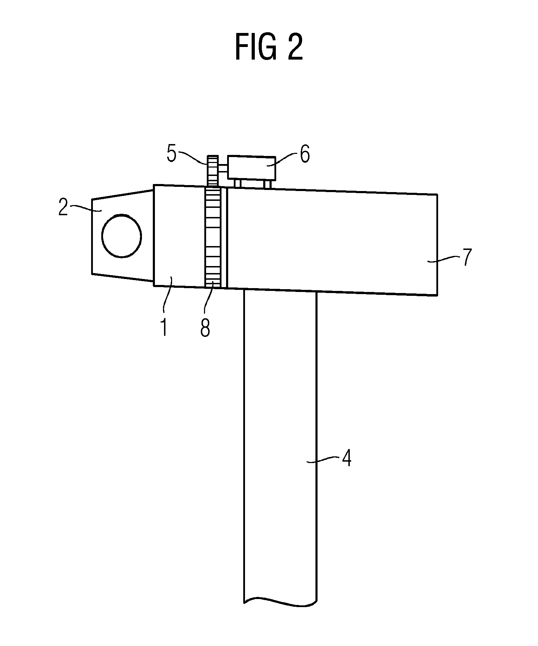

FIG 2 shows an actuator means mounted to the nacelle.

FIG 2 shows an actuator means comprising a motor 6 and a gear wheel 5 as transition means that is arranged on top of the nacelle 7. The gear wheel 5 is connected with a receiving unit 8. The receiving unit 8 is mounted to the rotor of the generator 1.

When the motor 6 is turning, the gear wheel 5 transfers the driving force via the receiving unit 8 to the rotor. The hub 2 is rotating together with the rotor of the generator 1.

The nacelle 7 is already installed on the tower 4.

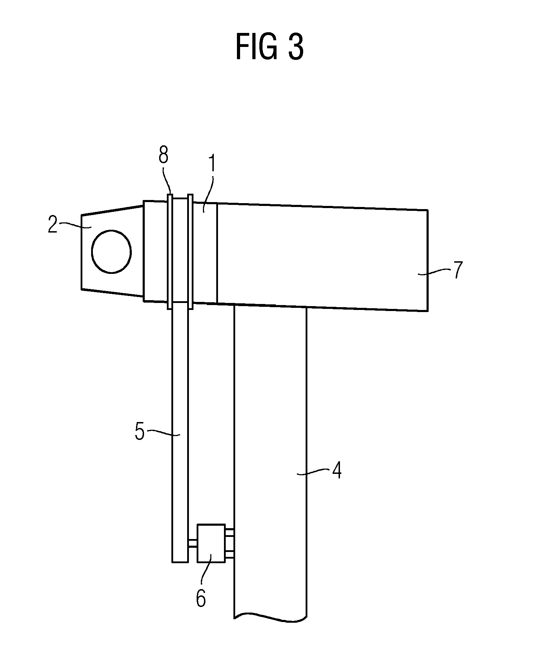

FIG 3 shows an actuator means mounted to the tower of the wind turbine.

FIG 3 shows a nacelle 7 of a wind turbine mounted on a tower 4. The generator 1 is equipped with a receiving unit 8. The actuator means comprises a motor 6. The motor 6 is mounted to the tower 4 or the wind turbine.

The actuator means further comprises a belt 5 as transition means. The belt 5 transfers the driving force of the motor 6 via the receiving unit 8 to the rotor of the generator 1. The hub 2 is rotating with the rotor of the generator.

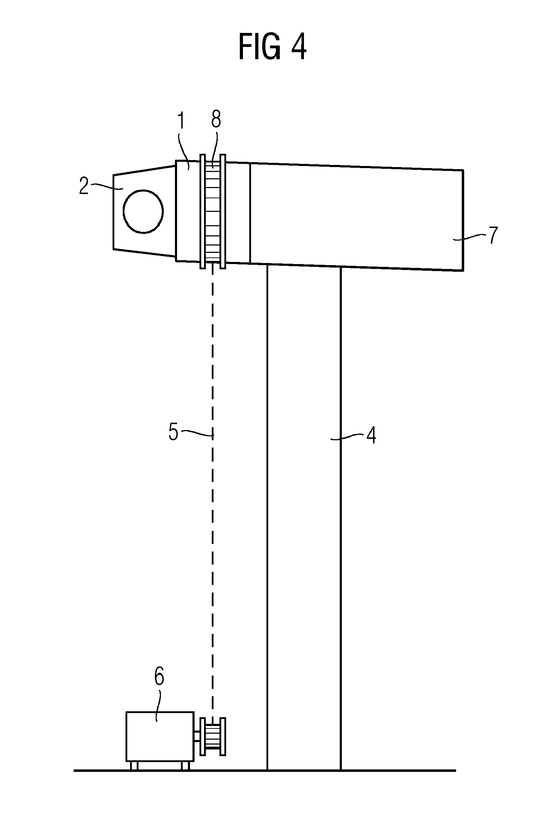

FIG 4 shows actuator means arranged separate from the wind turbine.

FIG 4 shows a nacelle 7 of a wind turbine. The nacelle 7 is mounted on a tower 4. A generator 1 and a hub 2 are mounted to the nacelle 7.

An actuator means comprises a motor 6 that is arranged on the ground next to the wind turbine. The generator is equipped with a receiving unit 8. The driving force of the motor 6 will be transferred via a transition means (shown in principle as dotted line 5) to the receiving unit 8.

The receiving unit transfers the driving force to the rotor of the generator 1 and the hub 2 that is rotating together with the rotor.

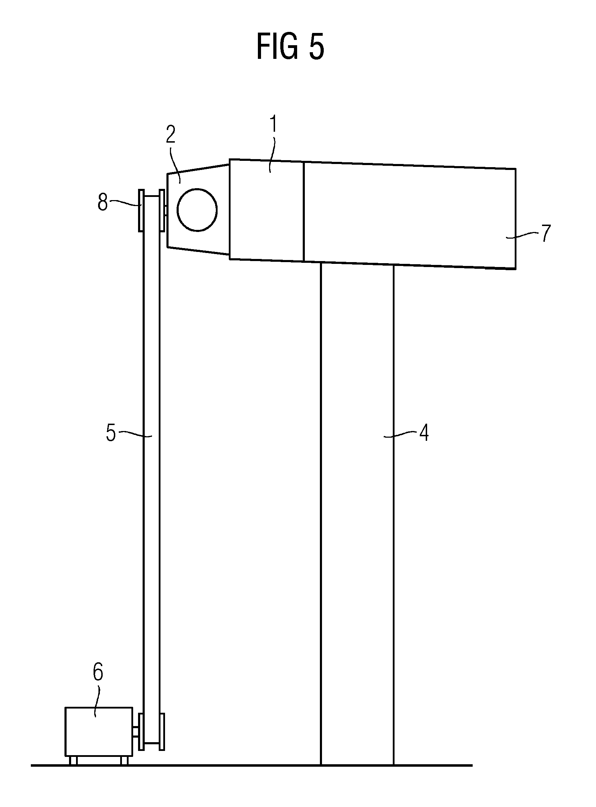

FIG 5 shows a wind turbine with the receiving unit arranged at the hub.

FIG 5 shows a wind turbine with a tower 4, a nacelle 7 a generator 1, that is mounted to the nacelle 7, and a hub 2, that is mounted to the generator 1.

An actuator means is arranged at the ground next to the wind turbine. The actuator means comprises a motor 6 and a transition means 5. The driving force of the motor 6 is transferred via the transition means 5 to the receiving unit 8. The receiving unit 8 is attached to the hub 2. The driving force acting on the receiving unit 8 will turn the hub 2.

## Claims

1. Direct driven wind turbine
- comprising an electrical generator (1) with a rotor and a stator, a hub (2) constructed to receive a rotor blade (3) and actuator means,
- whereby the hub (2) is connected to the rotor of the electrical generator (1),
- whereby the hub (2) and the rotor of the electrical generator (1) are rotatable mounted in respect to the stator of the generator (1),
- whereby the actuator means are constructed and arranged to rotate the rotor of the electrical generator (1) and the hub (2) of the wind turbine in respect to the stator of the electrical generator (1),
- wherein the actuator means comprises at least one motor (6) arranged outside of the housing of the wind turbine, while transition means (5) transfer a rotational driving force of the motor (6) for the rotation of the hub (2).

2. Direct driven wind turbine according to claim 1, wherein the wind turbine comprises a nacelle and the motor (6) is connected to the outside of the nacelle.

3. Direct driven wind turbine according to claim 1, wherein the wind turbine comprises a tower (4) and the motor (6) is connected to the outside of the tower (4).

4. Direct driven wind turbine according to claim 1, wherein the motor (6) is installed separately from the wind turbine.

5. Direct driven wind turbine according to one of the claims 1 to 4, wherein the transition means (5) is a belt.

6. Direct driven wind turbine according to one of the claims 1 to 4, wherein the transition means (5) is a chain.

7. Direct driven wind turbine according to one of the claims 1 to 4, wherein the transition means (5) is a gear wheel.

8. Direct driven wind turbine according to one of the claims 1 to 7, wherein the transition means (5) is connected to a receiving unit and the receiving unit is attached to the electrical generator (1) of the wind turbine.

9. Direct driven wind turbine according to one of the claims 1 to 7, wherein the transition means (5) is connected to a receiving unit and the receiving unit is attached to the hub (2) of the wind turbine.

10. Direct driven wind turbine according to one of the preceding claims, wherein the motor (6) comprises a gear.

11. Direct driven wind turbine according to claim 9, wherein the gear comprises a belt, a chain, a pinion wheel, a cyclo gear or a slew drive.

12. Direct driven wind turbine according to one of the preceding claims, wherein the motor (6) is controlled by a controller or a control system.

13. Direct driven wind turbine according to claim 11, wherein the controller is the controller of the wind turbine.

14. Direct driven wind turbine according to claim 11, wherein the control system is a controller separate from the turbine controller.

15. Method to mount a rotor blade to a hub of a direct driven wind turbine, which is configured according to one of the preceding claims, comprising the steps of:
- turning the hub (2) into a predetermined position around the axis of rotation of the rotor of the electrical generator (1) by the use of the actuator means, whereby the actuator means are constructed and arranged to rotate the rotor of the electrical generator (1) and the hub (2) of the wind turbine in respect to the stator of the electrical generator (1), and
- mounting a rotor blade (3) to the hub (2).
